# EUROPEAN PATENT APPLICATION

(11) **EP 4 660 008 A1**
(43) Date of publication of application: **10.12.2025**
(21) Application number: 24461579.5
(22) Date of filing: 04.06.2024
(51) Int. Cl.: B60N 2/75, B64D 11/06

(54) **SEAT ARMREST LOCKING MECHANISM**

(71) Applicant: B/E Aerospace Fischer GmbH, 84034 Landshut (DE)
(72) Inventor: KO ODZIEJCZAK, Marcin Szymon, 51-317 Wroc aw (PL); KALISZCZYK, Piotr Krzysztof, 51-317 Wroclaw (PL); CHODYNIECKI, Marcin Adam, 51-317 Wroc aw (PL)
(74) Representative: Dehns

(57) **Abstract**

An armrest locking mechanism comprising: an axle (20) defining an axis (A) therethrough, an armrest structure (10) mounted relative to the axle to be rotatable relative to the axle about the axis, a locking rod (32) mounted within the armrest structure and having a first, actuator end (320) and a second, locking end (321), the rod being moveable within the armrest structure such that the locking end (321) moves out of engagement with the axle responsive to movement of the actuator end, wherein the axle is formed with a surface feature (22) at a predetermined position around the circumference of the axle with which the locking end of the rod matingly engages to prevent rotation of locking rod and hence the armrest structure relative to the axle when the armrest is at an open position.

## Description

### TECHNICAL FIELD

The present disclosure relates to a locking mechanism of a seat armrest.

### BACKGROUND

Many seats are provided with an armrest on which a person seated in the seat can rest their arm. Often, the armrests are moveable between an open (deployed) and a closed (stowed) position to allow the armrest to be folded away if not needed or to provide more space or access to/from the seat. Such armrests are, for example, common in aircraft, including airplanes and helicopters, and other vehicles. Typically, such armrests are pivotable about an axis from the stowed position where the armrest is in or close to the plane of the backrest of the seat, to the open position extending from the back of the seat to a position in which a person seated in the seat can rest their arm on the armrest.

As such armrests are often used in moving/high vibrational environments, it is desirable to incorporate a locking mechanism to lock the armrest in the open position and prevent it from rattling/moving when open. The locking mechanism should, however, be simple to release so that the user can easily stow the armrest when needed.

There is a need, therefore, for an armrest locking mechanism that, in the locked state, provides secure, reliable locking resistant to vibrations, that can be easily manually released by e.g. a person in or near the seat.

### SUMMARY

Accordingly, there is provided an armrest locking mechanism comprising: an axle defining an axis therethrough, an armrest structure mounted relative to the axle to be rotatable relative to the axle about the axis, a locking rod mounted within the armrest structure and having a first, actuator end and a second, locking end, the rod being moveable within the armrest structure such that the locking end moves out of engagement with the axle responsive to movement of the actuator end, wherein the axle is formed with a surface feature at a predetermined position around the circumference of the axle with which the locking end of the rod matingly engages to prevent rotation of locking rod and hence the armrest structure relative to the axle when the armrest is at an open position.

In embodiments, the rod may be biased towards the axle, e.g. by a spring.

The rod may be provided with an actuating member e.g. a lever via which a user can move the rod in a direction out of engagement with the axle.

An opening e.g. a slot may be provided in the armrest through which the actuating member extends to be accessible to the user.

The surface feature may be e.g. a flattened surface portion on the circumference of the axle.

The axle may be a generally cylindrical drum other than where the surface feature is formed.

The locking end may be in the form of a fork having two arms for engagement with the axle.

A support structure may be provided for supporting the rod relative to the armrest structure whilst allowing movement of the rod relative to the axis. The support structure may comprise one or more plates secured to the armrest structure and have a hole therethrough to sliding receive the rod.

Also provided is a seat having an armrest comprising an armrest locking mechanism as defined above. The seat may have a seat back and a seat pan, wherein the armrest is in or adjacent the plane of the seatback when in the closed position and substantially parallel to the seat pan when in the open position.

The seat may be an aircraft seat, e.g. in a helicopter or airplane.

### BRIEF DESCRIPTION

Examples of a locking mechanism according to the disclosure will now be described with reference to the drawings. It should be noted that these are examples only and variations are possible within the scope of the claims.
Figure 1 shows a 3D view of an armrest with a locking mechanism according to this disclosure.
Figure 2 shows a cut-away view of an armrest such as shown in Fig. 1, showing the locking mechanism.
Figures 3A, 3B and 3C are provided to illustrate the operation of a locking mechanism according to the disclosure.

### DETAILED DESCRIPTION

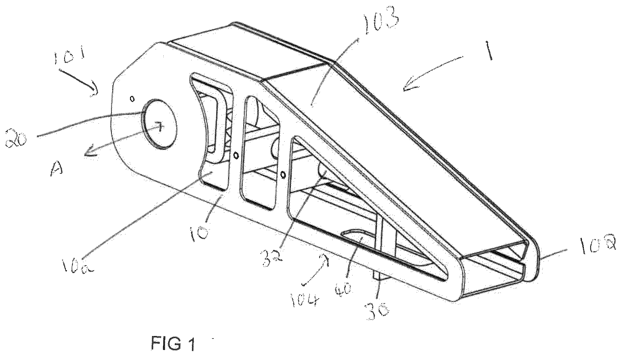

Figure 1 shows an armrest 1 into which a locking mechanism according to the disclosure can be incorporated. The armrest is shown here in the open or folded down/deployed position. The armrest has a frame 10 defining the outer shape of the armrest. Typically, cushioning or cladding may be provided over the frame for comfort and/or aesthetic reasons although in a basic form e.g. where low weight and/or cost takes priority over comfort/aesthetics, the armrest may be provided without any cushion or cladding or covering over the frame. Fig. 1 shows the armrest without any covering for ease of explanation.

The frame 10 can be made of any suitable material e.g. plastic or metal. Where weight and/or cost is an important consideration, e.g. in aircraft, the frame may be made of sheet metal and may be formed with cut-out sections 10a to reduce overall weight and material costs. Other materials and configurations are also possible.

The armrest shown in the example has a typical shape with a rear end 101 that is typically mounted to or adjacent the seat back, and a front end 102 that, in use, will be spaced from the seat back, and an armrest surface 103 extending from the rear to the front end. In the example, the armrest surface slopes down from the rear end to the front end to provide an ergonomically advantageous shape on which to rest the arm when in a seated position when the armrest is in the open position. Other shapes, e.g. a flat armrest surface, are, of course, also possible. The lower surface 104 of the armrest, opposite the armrest surface, is typically spaced from the seat pan when opened out.

The armrest is pivotal about the axis A of a pivot axle 20, between an open and a closed position. The axle 20 is located at or close to the rear end 101 of the armrest and is fixed such that the armrest parts rotate relative thereto.

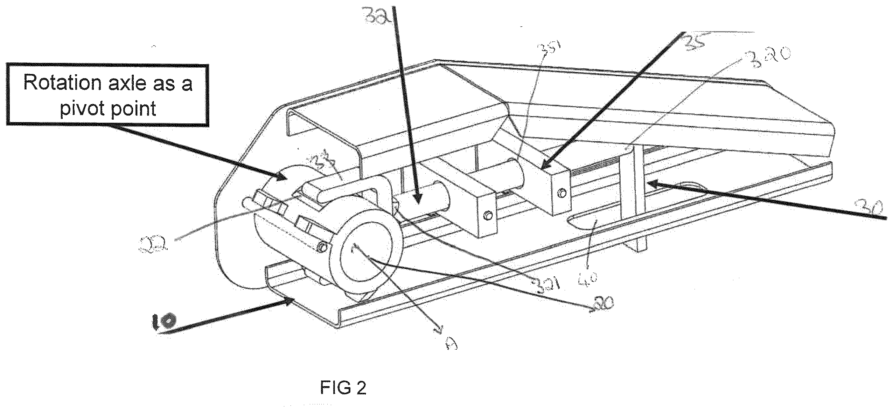

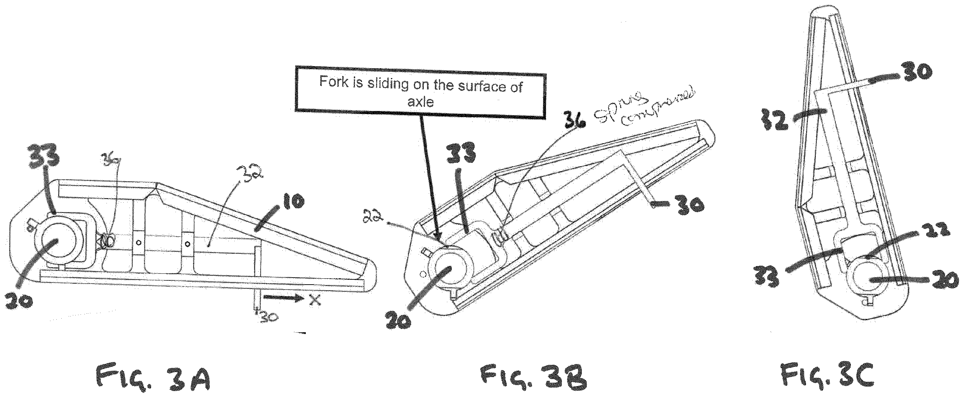

A locking mechanism, disclosed further below with reference to Figs. 2 and 3, is provided to lock the armrest in the open position. The locking mechanism is biased to the locking position in engagement with the axle and can be released from the locked position, to enable the armrest to be folded to the closed position on activation, by a user, of an actuating member 30 accessible to the user. In the example, the actuating member 30 is a lever 30 extending from the locking mechanism inside the armrest to the exterior of the armrest e.g. through a slot 40 in the lower surface 104 of the armrest. It is possible, however, that the actuating member may be another type of actuator e.g. a knob, handle, etc. and this may be accessible to the user at other locations e.g. via a side of the armrest or via the front 102 of the armrest. The actuating member 30 must be configured to cause a rod 32 of the locking mechanism to move linearly relative to the frame away from the axle 20.

The locking mechanism, located within the armrest, will now be defined with reference to the example shown in Fig. 2.

The locking mechanism comprises a locking rod 32 mounted within the frame 10 to be movable, responsive to operation of the actuating member 30, towards and away from the axle 20. In the example shown, the rod 32 is movable linearly substantially in the direction between the front and rear ends of the frame, i.e. substantially orthogonal to the axis A. Other orientations are, however, possible to move the rod 32 such that its locking end 321 (described further below) is moved into and out of engagement with the axle 20.

The rod 32 has a first end 320 at or proximal to which the actuating member 30 is provided, and a second, opposite, locking end 321 which is formed with a pair of arms 33 (also described herein as a fork 33) configured to engage with a surface feature 22 on the axle 20, in the locked position, as described further below.

The rod 32 may be supported within the frame 10, and to pivot with the frame, by e.g. a support structure 35. This may be in the form of one or more plates or brackets having a hole 351 formed therethrough, through which the rod 32 passes with sufficient play to allow the rod 32 to slide linearly relative to the support structure 35.

The axle 20, which may be a cylindrical or drum axle 20, is provided with a surface feature 22 configured to mate with the arms 33 of the locking end 321 of the rod 32 when the rod is in the locked position when the armrest is in the open position. Here the surface feature is in the form of a flattened surface 22 but maybe some other feature such as a notch or recess or the like.

Operation of the locking mechanism will now be described with reference to Figs. 3A to 3C.

Fig. 3A shows the armrest in the opened out (open) position. In this position, the rod 32 is positioned, and may be biased e.g. by a spring 36, such that the locking end 321 arms 33 engage the axle 20 and the location of the surface feature 22 on the axle is such that when the armrest is open, an arm 33 of the fork mates with the surface feature 22 and the locking mechanism and, hence, the frame and the armrest, is secured against further rotation relative to the axle and the armrest is securely held in the open state.

To release the locking mechanism to allow the armrest to be folded or pivoted to the closed/stowed state, the user actuates the locking mechanism via the actuating member 30. In this example, this is a lever or handle extending from the first end of the rod 32 through a slot 40 in the lower side of the armrest, but other actuating members could be provided also at different positions and orientations relative to the rod 32 provides that the user is able to cause the rod 32 to move in a direction away from the axle 20. In this example, the user pulls the lever 30 in the direction of arrow X, against the bias of the rod 32 e.g. against the spring force such that the arm 33 of the fork 321 moves out of engagement with the surface feature 22 on the axle 20. The user is then able to rotate the armrest (and the locking mechanism therein) about the axle (as seen in Fig. 3B). The end of the rod 32 is either completely out of engagement with the axle during rotation or is able to slide around the outer surface of the axle as it is no longer engaged with the surface feature.

Because the surface feature 22 is only provided on the axle at a position corresponding to the location of the fork arm 33 when the armrest is in the open position, and at other positions, the outer surface of the axle does not allow any mating engagement of the fork arm 33, the fork arm 33 is able to slide around the axle as the armrest rotates to the closed position, and the user does not need to keep applying the pulling force to the lever 30 - this is only necessary to initially release the locking mechanism and begin the closing rotation.

Fig. 3C shows the armrest in the fully closed (stowed) position where the locking mechanism is not actuated.

In the reverse operation, to open the armrest, the user just needs to draw the armrest down by rotating about the axis A of the axle 20 (from the position in Fig. 3C, via the position in Fig. 3B to the position in Fig. 3A. In the open position, the fork arm 33 has rotated to the position where it meets and matingly engages the surface feature 22 and moves in the direction opposite to direction X, e.g. by application of force to the lever 30 in that direction or, where the rod is spring biased, under the bias e.g. of spring 36, to secure the arm against rotation from that position until the user moves the lever 30 again.

The locking mechanism of this disclosure only requires one, structurally robust and simple, moving part (the rod with its fork end) to lock and release the armrest and is therefore simple to assembly and operate and maintain. The mechanism ensures stability of the armrest in the locked position but can also be easily released by the hands of a user to stow the armrest away from the open position e.g. into the seat back.

## Claims

1. An armrest locking mechanism comprising: an axle (20) defining an axis (A) therethrough, an armrest structure (10) mounted relative to the axle to be rotatable relative to the axle about the axis, a locking rod (32) mounted within the armrest structure and having a first, actuator end (320) and a second, locking end (321), the rod being moveable within the armrest structure such that the locking end (321) moves out of engagement with the axle responsive to movement of the actuator end, wherein the axle is formed with a surface feature (22) at a predetermined position around the circumference of the axle with which the locking end of the rod matingly engages to prevent rotation of locking rod and hence the armrest structure relative to the axle when the armrest is at an open position.

2. The armrest according to claim 1, wherein the rod (32) is biased towards the axle (20).

3. The armrest according to claim 2, comprising a spring (36) to bias the rod (32) towards the axle (20).

4. The armrest according to any preceding claim, wherein the rod (32) is provided with an actuating member (30) via which a user can move the rod (32) in a direction out of engagement with the axle.

5. The armrest according to claim 4, further comprising an opening in the armrest through which the actuating member extends to be accessible to the user.

6. The armrest according to claim 4 or 5, wherein the actuating member is a handle (30) at or adjacent the actuator end of the rod.

7. The armrest according to any preceding claim, wherein the surface feature (22) comprises a flattened surface portion on the circumference of the axle.

8. The armrest according to any preceding claim, wherein the axle (20) is a generally cylindrical drum other than where the surface feature (22) is formed.

9. The armrest according to any preceding claim, wherein the locking end (321) is in the form of a fork having two arms (33) for engagement with the axle (20).

10. The armrest according to any preceding claim, further comprising a support structure (35) for supporting the rod (32) relative to the armrest structure (10) whilst allowing movement of the rod relative to the axis (20).

11. The armrest according to claim 10, wherein the support structure comprises one or more plates secured to the armrest structure and having a hole (351) therethrough to sliding receive the rod.

12. A seat having an armrest comprising an armrest locking mechanism as claimed in any preceding claim.

13. A seat as claimed in claim 12 having a seat back and a seat pan, wherein the armrest is in or adjacent the plane of the seatback when in the closed position and substantially parallel to the seat pan when in the open position.

14. A seat as claimed in claim 12, being an aircraft seat.
